Europäisches Patentamt

European Patent Office

Office européen des brevets

(11) Veröffentlichungsnummer: **0 224 071 B1**

(12) **EUROPÄISCHE PATENTSCHRIFT**

(45) Veröffentlichungstag der Patentschrift: 20.03.91

(51) Int. Cl.5: **C08G 69/34**, C09D 5/38

(21) Anmeldenummer: **86115120.7**

(22) Anmeldetag: **31.10.86**

(54) Carboxylgruppen enthaltende Polyamide, Verfahren zu ihrer Herstellung und ihre Verwendung zur Herstellung wässriger Bronzedispersionen.

(30) Priorität: 26.11.85 DE 3541693

(43) Veröffentlichungstag der Anmeldung:
03.06.87 Patentblatt 87/23

(45) Bekanntmachung des Hinweises auf die Patenterteilung:
20.03.91 Patentblatt 91/12

(84) Benannte Vertragsstaaten:
BE CH DE FR GB IT LI NL SE

(56) Entgegenhaltungen:
EP-A- 0 003 246
FR-A- 1 400 148
FR-A- 2 383 209
US-A- 4 399 258

(73) Patentinhaber: SCHERING AKTIENGESELL-
SCHAFT Berlin und Bergkamen
Ernst-Schering-Strasse 14 Postfach 15 40
W-4709 Bergkamen(DE)

(72) Erfinder: Drawert, Manfred, Dr. Dipl.-Chem.
Alte Kreisstrasse 13
W-5758 Fröndenberg(DE)
Erfinder: Krase, Horst
Unterster Kamp 14
W-4700 Hamm 1(DE)

## Beschreibung

Gegenstand der Erfindung sind Carboxylgruppen enthaltende Polyamide, ein Verfahren zu ihrer Herstellung sowie ihre Verwendung zur Herstellung von wässrigen Bronzedispersionen.

Bronzefarben finden heute überall dort Verwendung, wo die Anstrichsfilme einen metallischen Oberflächeneffekt, insbesondere ein metallisch glänzendes Aussehen im Farbton eines (Edel-)Metalles aufweisen sollen und wo die Blattmetalle aus preislichen oder technischen Gründen nicht verwendet werden können.

Als Bronzefarben oder Bronzelacke werden dabei die Anstrichstoffe aus Bindemittel, Lösungsmittel, Bronzepulver oder Bronzepasten bezeichnet. Bronzepulver umfaßt alle zu schuppenförmigen Metallteilchen oder -Blättchen ausgeschlagene Pigmente (Nichteisen-Metalle und Legierungen), die einen metallischen Effekt erzielen, ohne Rücksicht auf chemische Zusammensetzung oder Farbton.

Verwendung finden neben der echten Goldbronze (Pudergold) in der Massengüterfertigung die Goldbronzen aus verschiedenen, den Farbton bestimmenden Kupfer-Zink-Legierungen; die durch Oxidieren (Feuer) nachgetönten Anlaufbronzen; die mit Farbstoffen eingefärbten Patentbronzen und als Ersatz für die empfindlichen Silber- oder Silber/Nickel-Bronzen Aluminiumpulver; Kupferbronzen (Reinkupfer).

Die Bronzepulver (Metalleffekt-Pigmente) können einen Durchmesser von wenigen Millimetern (Flitter) bis zu wenigen Micrometern haben, wobei die Teilchengröße den Glanz des fertigen Anstrichs mitbestimmen kann.

Durch geeignete Kombination von Bindemittel, Lösungsmittel, Zusatzstoffen (z. B. Silikon oder Dispergiermittel, Stabilisatoren, Lösungsvermittler) und Verwendung entsprechend behandelter Pigmente (Leafing, Non-Leafing-Typen) ist es möglich, die im Anstrichsfilm erwünschte Wirkung wie Chromeffekt, Metalleffekt, Hammerschlageffekt zu erzielen.

Besondere Aufmerksamkeit muß bei der Herstellung der Farben den Bindemitteln und den Lösungsmitteln gewidment werden, da durch Pigmentkorrosion, Oxidation, Eindickung optisch oder physikalisch fehlerhafte Oberflächen entstehen können.

Große Bedeutung haben in den letzten Jahren wässrige Bronzedispersionen für den Einsatz als Dekorationslacke neben Metallen auf insbesondere saugenden Untergründen wie Plakaten, Kartonagen, Pappe, Papier gefunden. Ein bedeutendes Anwendungsgebiet stellt hier der Drucksektor dar, wo Beschichtungen von hohen Dechvermögen für die verschiedenen Verfahren wie Tiefdruck, Siebdruck, Flexodruck, Offsetdruck in den verschiedenen Farbtönen gefordert werden.

Für den sogenannten "Silberdruck" werden hier die Druckfarben allgemein mit Aluminium in Mengen zwischen 20 - 50 Gew.-% pigmentiert.

Die Verwendung von Aluminiumpigmenten ist nicht ganz unproblematisch und stellt besondere Anforderungen an die Sorgfalt bei der Auswahl geeigneter Binde- und Lösungsmittel. So ist bekannt, daß sie sowohl mit Alkali und Mineralsäuren, mit Chlorkohlenwasserstoffen (Friedel-Crafts-Reaktion) unter Umständen sehr heftig reagieren können. Mit Harzsäuren, Naphtensäuren und den meisten organischen Säuren kann ein Vergrauen der Oberfläche und der Verlust eines eventuellen Leafings infolge korrosiven Angriffs auf die Pigmentoberfläche eintreten.

Mit Wasser reagieren sie je nach Feinheitsgrad insbesondere in der Gegenwart von Basen unter Wasserstoffentwicklung, was neben den oben angeführten allgemeinen Nachteilen unter Umständen zu einem unerwünschten Druckanstieg in den Behältern führen kann.

In der Praxis können Aluminiumpigmente daher insbesondere in wässrigen Dispersionen nicht in Form ihrer Standardtypen eingesetzt werden. Von den entsprechenden Herstellern wurden daraufhin in der Vergangenheit durch besondere Fertigungsmethoden, spezielle Zusätze und bestimmte Formulierungen Sondertypen für diesen Einsatz entwickelt.

Das Eigenschaftsbild dieser Typen entspricht jedoch in mancher Hinsicht noch nicht den Anforderungen der Praxis. So sind z. B. die Lagerstabilitäten in Gegenwart von Wasser weiterhin begrenzt, wodurch manche Hersteller empfehlen, diese Aluminiumfarben erst unmittelbar vor der Verarbeitung herzustellen. Darüberhinaus muß den Besonderheiten der verschiedenartigen-Typen durch Verwendung bestimmter Bindemitteltypen und durch unterschiedliche Verarbeitungshinweise Rechnung getragen werden.

Ebenfalls ungeeignet sind die in der FR-A-1 400 148 beschriebenen Polyamide, welche hergestellt werden durch Kondensation von dimerisierten Fettsäuren, langkettigen monomeren Fettsäuren und einem Diamin. Das Verhältnis von Gesamtcarboxylgruppen zu Gesamtamingruppen soll im Bereich von 0,6 - 0,9 liegen, das heißt pro Carboxylgruppe werden 1,1 - 1,6 Amingruppen eingesetzt.

Für die Alkohollöslichkeit und die Stabilität ist die Mitverwendung von Imidgruppen bildenden aromatischen bzw. hydroaromatischen Carbonsäuren wesentlich. Diese Polyamide sind zwar in Alkohol, nicht jedoch in Wasser löslich.

Aufgabe der vorliegenden Erfindung war es daher, diese Nachteile des Standes der Technik zu überwinden und Polyamide zu finden, welche als Bindemittel in wässrigen Bronzefarben eingesetzt werden können, insbesondere in wässrigen Aluminiumbronze-Dispersionen, auch unter Verwendung von Aluminium-Standardtypen.

Diese Aufgabe wird gelöst durch carboxylgruppenhaltige Polyamide auf Basis von Isophthalsäure, dimerisierten Fettsäuren; Polyalkylenpolyaminen, Ethylendiamin und gegebenenfalls cycloaliphatischen Diaminen.

Gegenstand der Erfindung sind daher Carboxylgruppen enthaltende Polyamide, welche nach Neutralisation mit einer Base mit Wasser verdünnbar sind, herstellbar durch Kondensation von Aminverbindungen und einem Überschuß an Carbonsäuren, wobei als Reaktionskomponenten eine

A) Säuremischung, bestehend aus

a) Isophthalsäure und

b) dimerisierter Fettsäure worin das Verhältnis von A a) : A b) zwischen 0,7 : 0,3 bis 0,80 : 0,20, bezogen auf Gesamtsäureäquivalente, liegt und,

B) Aminmischung, bestehend aus

a) Diethylentriamin und/oder Dipropylentriamin und

b)1 Ethylendiamin und gegebenenfalls 2 cycloaliphatischen Diaminen worin das Verhältnis von B a) : B b) zwischen 0,4 : 0,6 bis 0,7 : 0,3, bezogen auf Gesamtaminäquivalente, liegt und worin die Menge an B b) 2 ≦ 0,25 Äquivalente, bezogen auf Gesamtaminäquivalente, beträgt und wobei das Verhältnis von A) : B) zwischen 1 : 0,7 bis 1 : 0,85, bezogen auf Säure- und Amingruppen, liegt, verwendet werden.

Die weiteren Gegenstände der Erfindung sind durch die Ansprüche definiert.

Die erfindungsgemäß mitverwendeten dimerisierten Fettsäuren sind handelsübliche Produkte, welche aus ungesättigten natürlichen und synthetischen einbasischen aliphatischen Fettsäuren mit 16 - 22 Kohlenstoffatomen, bevorzugt 18 C-Atomen, nach bekannten Methoden erhältlich sind (vgl. z. B. US-PS 2 482 761, US-PS 3 256 304).

Typische im Handel erhältliche dimerisierte Fettsäuren haben etwa folgende Zusammensetzung:

| | |
|---|---|
| monomere Säuren (Mo) | 5 - 15 Massenprozent |
| dimere Säuren (Di) | 60 - 80 " |
| trimere u. höherpolymerisierte Säuren (Tri) | 10 - 35 " |

Erfindungsgemäß bevorzugt werden Säuren, deren Dimeranteil um die 75 Massenprozent beträgt. Es können aber auch solche verwendet werden, deren Gehalt an dimerer Säure durch die allgemein bekannten Destillationsverfahren erhöht wurde oder die nach bekannten Verfahren hydriert worden sind. Der Anteil der dimerisierten Fettsäuren liegt zwischen ca. 0,20 bis 0,3, insbesondere 0,2 - 0,22 Äquivalenten, bezogen auf Gesamtsäuremenge.

Als erfindungsgemäß gegebenenfalls mitverwendbare aliphatische Dicarbonsäuren kommen insbesondere solche mit 6 - 12 C-Atomen zur Anwendung wie z. B. Adipinsäure, Azelainsäure, Sebazinsäure, Dekandicarbonsäure. Sie können allein oder in Mischung zur Erzielung besonderer Effekte mitverwendet werden. Da sie aber Löslichkeit und Erweichungspunkt beeinflussen, ist ihr Anteil in der Regel auf ca. 0,2 Äquivalente, bezogen auf Gesamtsäureäquivalente, oder darunter beschränkt.

Bei einer Gesamtsäuremenge von 1,0 Äquivalenten soll der Anteil der erfindungsgemäß mitverwendeten Isophthalsäure zwischen 0,7 bis 0,85, insbesondere 0,75 bis 0,8 Äquivalenten, betragen. Eine geringe Abweichung dieser Grenzen ist zwar möglich, führt aber zu Produkten, die für den erfindungsgemäßen Verwendungszweck ohne Vorteil sind.

Als Polyaminkomponente gemäß B a) werden Diethylentriamin und Dipropylentriamin verwendet, wobei diese Amine allein oder in beliebigen Mischungen miteinander eingesetzt werden können. Ihr Anteil an der Gesamtaminmenge ( = 1,0 Äquivalente) liebt zwischen 0,4 - 0,7, insbesondere 0,45 - 0,55 Äquivalenten.

Als Co-Diamine gemäß B b) werden entweder Ethylendiamin allein (B b)1) oder Mischungen aus Ethylendiamin und cycloaliphatischen Diaminen (B b)2) wie insbesondere 3,5,5-Trimethyl-3-aminomethylcyclohexylamin und/oder 3(4),8(9)-Bis-(aminomethyl)-tricylo[5.2.1.0$^{2,6}$]decan und/oder 3,3'-Dimethyl-4,4'diamino-dicyclohexylamin mitverwendet.

Die Menge der Co-Diamine liebt erfindungsgemäß zwischen 0,3 bis 0,6, insbesondere zwischen 0,45 bis 0,55 Äquivalenten, bezogen auf Gesamtaminäquivalente, wobei die Menge der cycloaliphatischen Diamine (B b)2) 0,25 Äquivalente nicht überschreiten sollte.

Geringe Abweichungen von den gegebenen Grenzen sind zwar möglich, führen aber zu Produkten, welche für den erfindungsgemäßen Verwendungszweck, die Herstellung wässriger Bronzedispersionen, ohne Vorteil sind.

Das Verhältnis von Säuren zu Aminen ist bestimmt durch die Forderung, daß das resultierende Polyamid wasserlöslich oder zumindest weitgehend wasserverdünnbar sein muß und daß zum anderen die Filmeigenschaften den Anforderungen der Praxis genügen müssen.

Die Wasserlöslichkeit/-verdünnbarkeit wird erreicht, in dem man die Kondensation mit einem Säureüberschuß, bezogen auf Gesamtaminogruppen, durchführt und die freien Carboxylruppen des Polyamids anschließend mit einer der auf diesem Gebiet üblichen, vorzugsweise leicht flüchtiger organischen Basen, wie beispielsweise Ammoniak, Triethylamin und 2-Dimethylamino-2-methyl-propanol, 2-Methyl-2-amino-propanol, Morpholin, Diethylamino-ethanol, Dimethylaminoethanol, Ethanolamin, Diethanolamin, Triethanolamin neutralisiert.

Bei größer werdenden Säureüberschuß, d. h. sinkender Kettenlänge des Polyamids, verschlechtern sich aber die Filmeigenschaften, so daß die obere Grenze durch die erforderlichen Qualitätsmerkmale des Films bestimmt wird.

In allgemeinen hat sich ein Verhältnis von Carboxylgruppen zu Amingruppen im Bereich von ca. 1 : 0,7 bis 1 : 0,85, insbesondere 1 : 0,75 bis 1 : 0,8, als ausreichend erwiesen. Die resultierenden Polyamide wiesen dann Carboxylgruppenzahlen auf, welche einem Säurezahlbereich von ca. 50 bis 150, insbesondere 75 - 120, entsprachen.

Die Kondensationsreaktion erfolgt nach den allgemein auf diesem Gebiet üblichen Methoden, wobei die einzelnen Komponenten in allgemeinen in statistischer Verteilung im Polymermolekül vorliegen, eine teilweise Blockbildung aber nicht auszuschließen ist. Die Reaktionstemperaturen liegen zwischen ca. 210 - 250 $^\circ$C bei einer Gesamtreaktionszeit von ca. 4 - 8 h.

Die Säurezahlen wurden entsprechend DIN 53 402 und die Aminzahlen der Polyamide, welche im Bereich von ca. 15 - 50, insbesondere 20 - 35 liegen können, wurden entsprechend DIN 16 945 bestimmt.

Die erfindungsgemäß mitverwendeten Metallpigmente werden als "Bronzen" zusammengefaßt. Damit bezeichnet man allgemein alle Pigmente, die metallischen Effekt erzielen, ohne Rücksicht auf Farbton und chemische Zusammensetzung (DIN 55-943, 55 944, 55 945). Erfindungsgemäß bevorzugt werden die Bronzepulver, d. h. die zu Blättchen ausgeschlagenen Metalle und Legierungen mit Korngrößen <45 µm.

Hier kommen neben den echten Gold-, Silber- und Kupferbronzen auch die die entsprechenden Farben aufweisenden Legierungen oder mit löslichen Farbstoffen eingefärbten Bronzen zum Einsatz. Insbesondere aber hat sich Aluminiumpigment (DIN 55 923) als Ersatz für die Silberbronze in der Praxis durchgesetzt.

Das Verhältnis zwischen Bronze und Bindemittel ist unkritisch und hängt neben den Bronzetypen mit von den gewünschten rheologischen, optischen und allgemein lacktechnischen Eigenschaften der Dispersion bzw. des fertigen Films ab. Die Pigmentierung der Druckfarben für die einzelnen Applikationsverfahren bewegt sich allgemein zwischen 20 bis 60 Masse-% Bronzepulver und 40 - 80 Masse-% Bindemittel. In einzelnen Anwendungsbereichen kann die untere Grenze des Bronzeanteils auch <1 % und die obere bei ca. 95 Masse-% liegen.

Die Herstellung der Dispersion geschieht nach den auf diesem Gebiet allgemein üblichen Methoden, gegebenenfalls unter Mitverwendung der gebräuchlichen Additive wie Eindickungs-, Stabilisierungs-, Netzmittel, kurzkettiger Alkohole, Glycoläther. Die Wirkungsweise und die Mengen dieser Additive gehören zum bekannten Stand der Technik. Als Bedingung gilt hier nur, daß sie inert gegenüber Aluminium-Standard-Bronzen sind.

Erfindungsgemäß wird so verfahren, daß unter Rühren in der Siedehitze eine Lösung aus 15 g Harz, 3 g Triethylamin, 32 g Isopropanol/Wasser 1 : 1 hergestellt wird, in welcher nach Abkühlung noch 9 g Wasser, 2,6 g Propylenglykolmonomethyläther verrührt und anschließend 9,4 g Aluminiumbronze dispergiert werden.

Bei den eingesetzten Aluminiumbronzen handelt es sich um die handelsüblichen Produkte "Standard-Aluminiumpulver Stapa IL Chromal IV und Chromal X" (Eckart-Werke 851 Fürth, DE). Alle weiteren eingesetzten Bronzen sind ebenfalls handelsübliche Standard-Typen.

Wie aus Tabelle 2 hervorgeht, blieben nur die erfindungsgemäßen Dispersionen in Kombination mit den kritischen Aluminium-Bronzen flüssig und gebrauchsfähig, während die zum Vergleich mitverwendeten Produkte bereits nach kurzer Zeit anfingen zu schäumen und wenig später dann fest waren.

Die erfindungsgemäß als Bindemittel verwendeten Polyamide der Tabelle 1 wurden analog dem folgenden Beispiel hergestellt.

Beispiel 1

In einem 1 l Dreihalskolben, ausgerüstet mit Thermometer, Rührer, Destillationsaufsatz wurden

```
172,5  g   dimere Fettsäure (Dimergehalt 75 %)
178,5  g   Isophthalsäure
 35,4  g   Diethylentriamin (DTA)
 24,3  g   Ethylendiamin (EDA)
 27,2  g   Isophorondiamin (IPD) und
 44    ml  Wasser (ca. 10 Masse-%, bezogen auf
           Reaktanten)
```

eingewogen und mit Stickstoff gespült. Die Temperatur wurde innerhalb von 2 h auf 230 °C erhöht und dann 2 h bis 230 °C gehalten. Zur Vervollständigung der Reaktion wurde eine Kondensationsphase bei 230 °C und 16 mbar angeschlossen.

5

Tabelle 1

| Beispiele Erfindung | Verhältnis der Isophthalsäure (a) | Säureäquivalente (A) dimere Fettsäure(b) (Dimergehalt Gew.-%) | Verhältnis der Aminäquivalente (B) | | | Verhältnis A : B | Säurezahl | Ring u. Kugel DIN 1995 °C |
|---|---|---|---|---|---|---|---|---|
| | | | Diethylentriamin(a) | Ethylendiamin $(b_1)$ | Co-Diamin $(b_2)$ | | | |
| 1 | 0,78 | 0,22 (75) | 0,475 | 0,375 | IPD [1] 0,150 | 1 : 0,78 | 111 | 161 |
| 2 | 0,75 | 0,25 (75) | 0,476 | 0,379 | DDM [2] 0,143 | 1 : 0,75 | 86,2 | 160 |
| 3 | 0,78 | 0,22 (70) | 0,475 | 0,375 | TCD [3] 0,150 | 1 : 0,78 | 91 | 159 |
| 4 | 0,78 | 0,22 (80) | 0,475 | 0,375 | DDM 0,150 | 1 : 0,78 | 81 | 161 |
| 5 | 0,78 | 0,22 (75) | 0,400 | 0,375 | DDM 0,225 | 1 : 0,78 | 85 | 160 |
| 6 | 0,78 | 0,22 (96) | 0,500* | 0,500 | – | 1 : 0,8 | 120 | 100 |
| 7 | 0,78 | 0,22 (60) | 0,400* | 0,400 | IPD 0,200 | 1 : 0,8 | 111 | 136 |
| 8 | 0,78 | 0,22 (75) | 0,400* | 0,600 | – | 1 : 0,8 | 117 | 117 |
| 9 | 0,78 | 0,22 (75) | 0,700 | 0,300 | – | 1 : 0,8 | 76 | 165 |
| 10 | 0,78 | 0,22 (75) | 0,300 0,300* | 0,400 | – | 1 : 0,78 | 95 | ·119 |
| 11 | 0,78 | 0,22 (75) | 0,300 0,175* | 0,375 | IPD 0,150 | 1 : 0,78 | 87 | 146 |
| 12 | 0,70 0,08 [5] | 0,22 (75) | 0,475 | 0,375 | IPD 0,150 | 1 : 0,78 | 80 | 151 |
| 13 | 0,68 0,10 [6] | 0,22 (75) | 0,475 | 0,375 | IPD 0,150 | 1 : 0,78 | 83 | .152 |

EP 0 224 071 B1

Tabelle 1    (Fortsetzung)

EP 0 224 071 B1

| Beispiele Erfindung | Verhältnis der Isophthalsäure (a) | Säureäquivalente (A) dimere Fettsäure(b) (Dimergehalt Gew.-%) | Verhältnis der Aminäquivalente (B) | | | Verhältnis A : B | Säurezahl | Ring u. Kugel DIN 1995 °C |
|---|---|---|---|---|---|---|---|---|
| | | | Diethylentriamin(a) | Ethylendiamin $(b_1)$ | Co-Diamin $(b_2)$ | | | |
| Vergleich | | | | | | | | |
| 1 | 0,78 | 0,22 (96) | 0,475 | 0,200 | IPD  0,325 | 1 : 0,78 | 96 | 170 |
| 2 | 0,60 | 0,40 (75) | 0,450 | 0,350 | IPD  0,200 | 1 : 0,8 | 79 | 122 |
| 3 | 0,78 | 0,22 (75) | 0,500 | HDA  0,400 4) | IPD  0,100 | 1 : 0,8 | 51 | 160 |

\*   Dipropylentriamin
1) IPD   = 3,5,5,-Trimethyl-3-aminomethyl-cyclohexylamin
2) DDM  = 3,3'-Dimethyl-4,4'-diamino-dicyclohexylmethan

3) TDD   = 3(4),8(9)-Bis-(aminomethyl)-tricyclo-[5.2.1.0$^{2.6}$]decan
4) HDA   = 1,6-Diaminohexan

5) = Adipinsäure

6) = Dekamethylendicarbonsäure

## EP 0 224 071 B1

Tabelle 2

| Beispiel | Zustand nach 10wöchiger Standzeit bei Raumtemperatur mit | |
| --- | --- | --- |
| | Chromal IV | Chromal X |
| 1 | flüssig | flüssig |
| 2 | flüssig | flüssig |
| 3 | flüssig | flüssig |
| 4 | flüssig | flüssig |
| 5 | flüssig | flüssig |
| 6 | flüssig | flüssig |
| 7 | flüssig | flüssig |
| 8 | flüssig | flüssig |
| 9 | flüssig | flüssig |
| 10 | flüssig | flüssig |
| 11 | flüssig | flüssig |
| 12 | flüssig | flüssig |
| 13 | flüssig | flüssig |
| Vergleich | | |
| 1 | fest | fest |
| 2 | fest | fest |
| 3 | fest | fest |

## Ansprüche

1. Carboxylgruppen enthaltende Polyamide, welche nach Neutralisation mit einer Base mit Wasser verdünnbar sind, herstellbar durch Kondensation von Aminverbindungen und einem Überschuß an Carbonsäuren, wobei als Reaktionskomponenten eine

A) Säuremischung, bestehend aus
   a) Isophthalsäure und
   b) dimerisierter Fettsäure worin das Verhältnis von A a) : A b) zwischen 0,7 : 0,3 bis 0,80 : 0,20, bezogen auf Gesamtsäureäquivalente. liegt und

B) Aminmischung, bestehend aus
   a) Diethylentriamin und/oder Dipropylentriamin und
   b)1 Ethylendiamin und gegebenenfalls 2 cycloaliphatischen Diaminen worin das Verhältnis von B a) : B b) zwischen 0,4 : 0,6 bis 0,7 : 0,3, bezogen auf Gesamtaminäquivalente, liegt und worin die

8

Menge an B b)2 ≦ 0,25 Äquivalente, bezogen auf Gesamtaminäquivalente, beträgt und wobei das Verhältnis von A) : B) zwischen 1 : 0,7 bis 3 : 0,85, bezogen auf Säure- und Amingruppen, liegt, verwendet werden.

2. Polyamid gemäß Anspruch 1, dadurch gekennzeichnet, daß das Verhältnis von A a) : A b) zwischen 0,75 : 0,25 bis 0,78 : 0,22 liegt.

3. Polyamid gemäß den Ansprüchen 1 und 2, dadurch gekennzeichnet, daß das Verhältnis von B a) : B b) zwischen 0,45 : 0,55 bis 0,55 : 0,45 liegt.

4. Polyamid gemäß den Ansprüchen 1 bis 3, dadurch gekennzeichnet, daß zusätzlich aliphatische Dicarbonsäuren mit 6 bis 12 Kohlenstoffatomen mitverwendet werden.

5. Polyamid gemäß den Ansprüchen 1 bis 4, dadurch gekennzeichnet, daß als cycloaliphatische Diamine mindestens eines der Diamine 3,3'-Dimethyl-4,4'-diamino-dicyclohexylmethan, 3,5,5-Trimethyl-3-aminomethyl-cyclohexylamin, 3(4),8,(9)-Bis-(aminomethyl)-tricyclo[5.2.1.0$^{2,6}$] decan verwendet wird.

6. Polyamid gemäß den Ansprüchen 1 bis 5, dadurch gekennzeichnet, daß das Verhältnis von A : B zwischen 1 : 0,75 bis 1 : 0,8 liegt.

7. Verfahren zur Herstellung von Carboxylgruppen enthaltenden Polyamiden gemäß Anspruch 1 durch Kondensation von Aminen und einem Überschuß an Carbonsäuren, die unter einem Inertgas bei Temperaturen zwischen 210 °C bis 250 °C so kondensiert werden, daß ein Polyamid mit einem Säurewert von 50 bis 150 entsteht.

8. Verfahren zur Herstellung von Carboxylgruppen enthaltenden Polyamiden gemäß Anspruch 7, dadurch gekennzeichnet, daß das Verhältnis von A a) : A b) zwischen 0,75 : 0,25 bis 0,8 : 0,2 und das Verhältnis von B a) : B b) zwischen 0,45 : 0,55 bis 0,55 : 0,45 und das Verhältnis von A) : B) zwischen 1 : 0,75 bis,1 : 0,8 liegt:

9. Verfahren zur Herstellung von Carboxylgruppen enthaltenden Polyamiden gemäß den Ansprüchen 7 und 8, dadurch gekennzeichnet, daß als cycloaliphatische Diamine gemäß B b) 2 3,3'-Dimethyl-4,4'-diamino-dicyclohexylmethan, 3,5,5-Trimethyl-3-aminomethyl-cyclohexylamin, 3(4),8,(9)-Bis-(aminomethyl)-tricyclo[5.2.1.0$^{2,6}$]decan verwendet werden.

10. Verwendung der Polyamide gemäß den Ansprüchen 1 bis 6 als Lackbindemittel in wässrigen Bronzedispersionen, welche nach an sich bekannten Bedingungen durch Lösen der Polyamide in einer Mischung, bestehend aus Alkohol, Wasser und einem kurzkettigen Amin, und anschließendem Einrühren des Bronzepulvers hergestellt werden.

## Claims

1. Polyamides containing carboxyl groups which, after neutralisation with a base, are dilutable with water and which can be prepared by condensation of amine compounds and an excess of carboxylic acids, wherein there are used as reactants
   A) an acid mixture consisting of
      a) isophthalic acid and
      b) dimerised fatty acid in which the ratio of A a) : A b) is from 0.7 : 0.3 to 0.80 : 0.20, based on total acid equivalents, and
   B) an amine mixture consisting of
      a) diethylenetriamine and/or dipropylenetriamine and
      b)1 ethylenediamine and, optionally, 2 cycloaliphatic diamines in which the ratio of B a) : B b) is from 0.4 : 0.6 to 0.7 : 0.3, based on total amine equivalents, and in which the amount of B b)2 is ≦ 0.25 equivalent, based on total amine equivalents, and wherein the ratio of A) : B) is from 1 : 0.7 to 1 : 0.85, based on acid and amine groups.

2. Polyamide according to claim 1, characterised in that the ratio of A a) : A b) is from 0.75 : 0.25 to 0.78 :

0.22.

3. Polyamide according to claims 1 and 2, characterised in that the ratio of B)a) : B b) is from 0.45 : 0.55 to 0.55 : 0.45.

4. Polyamide according to claims 1 to 3, characterised in that, in addition, aliphatic dicarboxylic acids having from 6 to 12 carbon atoms are co-used.

5. Polyamide according to claims 1 to 4, characterised in that at least one of the diamines 3,3'-dimethyl-4,4'-diamino-dicyclohexylmethane, 3,5,5-trimethyl-3-aminomethyl-cyclohexylamine, $3(4),8,(9)$-bis-(aminomethyl)-tricyclo[$5.2.1.0^{2,6}$]decane is used as cycloaliphatic diamine.

6. Polyamide according to claims 1 to 5, characterised in that the ratio of A : B is from 1 : 0.75 to 1 : 0.8.

7. Process for the preparation of polyamides containing carboxyl groups acccrding to claim 1 by condensation of amines and an excess of carboxylic acids which are so condensed under an inert gas at temperatures of from 210°C to 250°C that a polyamide having an acid number of from 50 to 150 is produced.

8. Process for the preparation of polyamides containing carboxyl groups according to claim 7, characterised in that the ratio of A a) : A b) is from 0.75 : 0.25 to 0.8 : 0.2 and the ratio of B a) to B b) is from 0.45 : 0.55 to 0.55 : 0.45 and the ratio of A) : B) is from 1 : 0.75 to 1 : 0.8.

9. Process for the preparation of polyamides containing carboxyl groups according to claims 7 and 8, characterised in that 3,3'dimethyl-4,4'-diamino-dicyclohexylmethane, 3,5,5-trimethyl-3-aminomethyl-cyclohexylamine, $3(4),8,(9)$-bis-(aminomethyl)-tricyclo[$5.2.1.0^{2,6}$]decane are used as cycloaliphatic diamines according to B b).

10. The use of the polyamides according to claims 1 to 6 as varnish vehicles in aqueous bronze dispersions produced under conditions known per se by dissolving the polyamides in a mixture consisting of alcohol, water and a short-chained amine and subsequently stirring in the bronze powder.

## Revendications

1. Polyamides contenant des groupes carboxyles, qui, après neutralisation avec une base, sont diluables à l'eau, peuvent être préparés par condensation d'amines et d'un excès d'acide carboxylique, quand on utilise, comme corps participant à la réaction :
   A) un mélange d'acides, consistant en
      a) l'acide isophtalique, et
      b) de l'acide gras dimérisé, le rapport entre A a) et A b) se situant entre 0,7:0,3 et 0,80 :0,20, par rapport au nombre total des équivalents d'acides, et
   B) un mélange d'amines, consistant en
      a) la diéthylène triamine et/ou la dipropylène triamine, et
      b) 1 l'éthylène diamine, et éventuellement 2 des diamines cycloaliphatiques, le rapport entre B a) et B b) se situant entre 0,4:0,6 et 0,7:0,3, sur la base des équivalents totaux d'amines, et la quantité de B b)2 étant inférieure ou égale à 0,25 équivalent, sur la base des équivalents totaux d'amines, et le rapport entre A) et B) se situant entre 1:0,7 et 1:0,85, sur la base des groupes acides et amines.

2. Polyamide selon la revendication 1, caractérisé en ce que le rapport entre A a): A b) se situe entre 0,75:0,25 et 0,78:0,22.

3. Polyamide selon les revendications 1 et 2, caractérisé en ce que le rapport entre B a) et B b) se situe entre 0,45:0,55 et 0,55:0,45.

4. Polyamide selon les revendications 1 à 3, caractérisé en ce qu'on co-utilise en outre, pour sa préparation, des acides dicarboxyliques aliphatiques comportant 6 à 12 atomes de carbone.

**5.** Polyamide selon les revendications 1 à 4, caractérisé en ce qu'on utilise comme diamines cycloaliphatiques au moins l'une des diamines que sont le diméthyl-3,3' diamino-4,4' dicyclohexylamine, la triméthyl-3,5,5 aminométhyl-3 cyclohexylamine, le bis-(aminométhyl)-3(4), 8(9)-tricyclo[5.2.1.0$^{2,6}$] décane.

**6.** Polyamide selon les revendications 1 à 5, caractérisé en ce que le rapport entre A et B se situe entre 1:0,75 et 1:0,8.

**7.** Procédé pour préparer des polyamides contenant des groupes carboxyles, selon la revendication 1, par condensation d'amines et d'un excès d'acides carboxyliques, sous un gaz inerte, à des températures comprises entre 210 $^\circ$C et 250 $^\circ$C, de manière qu'il en résulte un polyamide ayant un indice d'acide allant de 50 à 150.

**8.** Procédé pour préparer des polyamides contenant des groupes carboxyles, selon la revendication 7, procédé caractérisé en ce que le rapport entre A a) et A b) se situe entre 0,75:0,25 et 0,8:0,2, et le rapport entre B a) et B b) se situe entre 0,45:0,55 et 0,55:0,45, et le rapport entre A et B se situe entre 1:0,75 et 1:0,8.

**9.** Procédé pour préparer des polyamides contenant des groupes carboxyles, selon les revendications 7 et 8, caractérisé en ce qu'on utilise comme diamines cycloaliphatiques selon B b) 2 le diméthyl-3,3' diamino-4,4' dicyclohexylméthane, la triméthyl-3,5,5 aminométhyl-3 cyclohexylamine, le bis-(aminométhyl)-3(4),8(9) tricy :-clo[5.2.1.0$^{2,6}$]décane.

**10.** Utilisation des polyamides selon les revendications 1 à 6 comme liants pour laques et vernis dans des dispersions aqueuses de bronze, qui ont été préparées dans des conditions connues en elles-mêmes par dissolution des polyamides dans un mélange consistant en de l'alcool, de l'eau et une amine à courte chaîne, puis délayage de la poudre de bronze.